# EUROPEAN PATENT SPECIFICATION

(11) **EP 4 467 366 B1**
(45) Date of publication and mention of the grant of the patent: **22.07.2026**
(21) Application number: 23175707.1
(22) Date of filing: 26.05.2023
(51) Int. Cl.: B60H 1/00, B60H 1/32, F28F 9/02, F28F 19/00, F28F 13/06, F28F 13/08, F28D 21/00

(54) **FLUID DISTRIBUTION MODULE FOR A THERMAL MANAGEMENT SYSTEM**
FLUIDVERTEILUNGSMODUL FÜR EIN WÄRMEVERWALTUNGSSYSTEM
MODULE DE DISTRIBUTION DE FLUIDE POUR UN SYSTÈME DE GESTION THERMIQUE

(43) Date of publication of application: 27.11.2024
(73) Proprietor: Valeo Electrification, 95892 Cergy Pontoise (FR)
(72) Inventor: FIENE, Andreas, 96476 Bad Rodach (DE)
(74) Representative: Valeo Powertrain Systems

(56) References cited:
- WO-A1-2021/048095
- CN-A- 112 543 712
- US-A1- 2001 020 786
- US-A1- 2017 324 132

## Description

### Technical Field

This disclosure pertains to the field of fluid distribution modules for a thermal management system.

### Background Art

An automotive vehicle is classically equipped with one or several thermal management systems that allow to control and modify the temperature of different parts of the vehicle, such as the engine, batteries, or the interior of the vehicle cabin in which the occupants of the automotive vehicle travel.

Each thermal management system uses at least one heat transfer fluid that is involved in a heat exchange with the part of the vehicle for which it is necessary to control or modify the temperature. For example, the heat transfer fluid is a coolant or a refrigerant.

To distribute said fluid in the automotive vehicle, the corresponding thermal management system is provided with a fluid distribution module. The fluid distribution module comprises a plurality of channels in which the distributed fluid travels at different temperatures. The fluid comes from and/or is directed to a component of the thermal management system that is attached to the fluid distribution module, like a compressor, a heat exchanger, a condenser, etc.

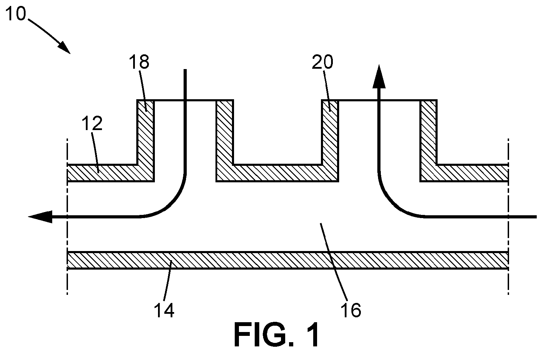

Figure 1 shows a cross-sectional side view of a portion of a known fluid distribution module 10. The module 10 is formed by sealing together a first plate 12 and a second plate 14. The first plate 12 comprises a plurality of tracks that protrude perpendicularly to the rest of the first plate 12, whereas the second plate 14 is essentially flat. Each channel 16 is formed in the space between each track of the first plate 12 and the second plate 14.

The distributed fluid arrives at the corresponding channel 16 through a fluid inlet 18 and exits said channel 16 through a fluid outlet 20. The fluid inlet 18 and the fluid outlet 20 are arranged on the first plate 12.

As schematized in figure 1, when flowing between the fluid inlet 18 and the corresponding channel 16, or between the corresponding channel 16 and the fluid outlet 20, the distributed fluid must turn an angle of about 90°. This creates turbulences at the interface between the fluid inlet/outlet and the channel. These turbulences are accompanied by an increase in fluid pressure in the module and cause erosion of the module at the interface between the fluid inlet/outlet and the channel, which generates contamination that can adhere to sensitive areas such as valves.

Document CN112543712A discloses a fluid distribution module for a thermal management system according to the preamble of claim 1.

There is therefore a need to develop a fluid distribution module for a thermal management system in which turbulences at the interface between the fluid inlet/outlet and the channel are reduced.

### Summary

To this end, it is proposed a fluid distribution module for a thermal management system according to claim 1.

Thanks to the first pocket of the second plate that is substantially concave and that is opposite to the at least one first heat transfer fluid passage, when the heat transfer fluids enter or exit the fluid distribution module, they have more space to turn. This prevents the heat transfer fluids from rotating at an angle of about 90° when entering or exiting the fluid distribution module. The flow of heat transfer fluids is therefore smoother, and the occurrence of turbulences at the interface between the fluid inlet/outlet and the channel is limited. Consequently, the pressure of the heat transfer fluids in the module is reduced as well as the risk of erosion of the module, and subsequent generation of contamination, at the interface between the fluid inlet/outlet and the channel.

In addition, due to the reduction of turbulences, the noise generated by the circulation of the heat transfer fluids in the fluid distribution module is reduced. This reduction of noise is particularly important when the fluid distribution module is attached to the vehicle chassis.

Finally, as the flow of the heat transfer fluids is smoother, the heat transfer fluids move in the fluid distribution module with less energy and speed, so that energy consumption in the module is minimized.

At least for all these reasons, thanks to said first pocket, the cooling and/or heating performances of the fluid distribution module are improved.

In another aspect, the at least one first heat transfer fluid passage forms a first angle comprised between 70° and 110° with the first plate.

In another aspect, said first angle is substantially equal to 90°.

In another aspect, a radius of curvature of the first pocket, called pocket radius, is comprised between 20 mm and 50 mm, preferably between 30 mm and 40 mm.

In another aspect, the at least one first heat transfer fluid passage comprises a bend connected to the first plate, the bend having a substantially curved surface.

In another aspect, a radius of curvature of said bend, called bend radius, is comprised between 1 mm and 15 mm.

In another aspect, said bend radius is bigger than 5 mm.

In another aspect, the second plate is connected to at least one second heat transfer fluid passage forming a heat transfer fluid inlet or a heat transfer fluid outlet of the fluid distribution module, the first plate comprising at least a second pocket substantially concave placed opposite to the at least one second heat transfer fluid passage.

In another aspect, it is proposed a method for manufacturing a fluid distribution module as described above, the method comprising:
a) Providing a first plate with at least one first heat transfer fluid passage forming a heat transfer fluid inlet or a heat transfer fluid outlet of the fluid distribution module;
b) Providing a second plate with at least one first pocket substantially concave;
c) Arranging the first plate opposite to the second plate to form a plurality of channels for distributing heat transfer fluids, the at least one first heat transfer fluid passage being placed opposite to the at least first pocket.

In another aspect, step b) comprises stamping the second plate to form the at least one first pocket.

In another aspect, step b) comprises:
- Making at least one through hole in the second plate;
- Attaching a concave piece to said through hole to form the at least one first pocket.

### Brief description of Drawings

Other features, details and advantages will be shown in the following detailed description and on the figures, on which:
**Fig. 1**
   [Fig. 1] is a schematical cross-sectional side view of a portion of a fluid distribution module of the prior art and described above.
**Fig. 2**

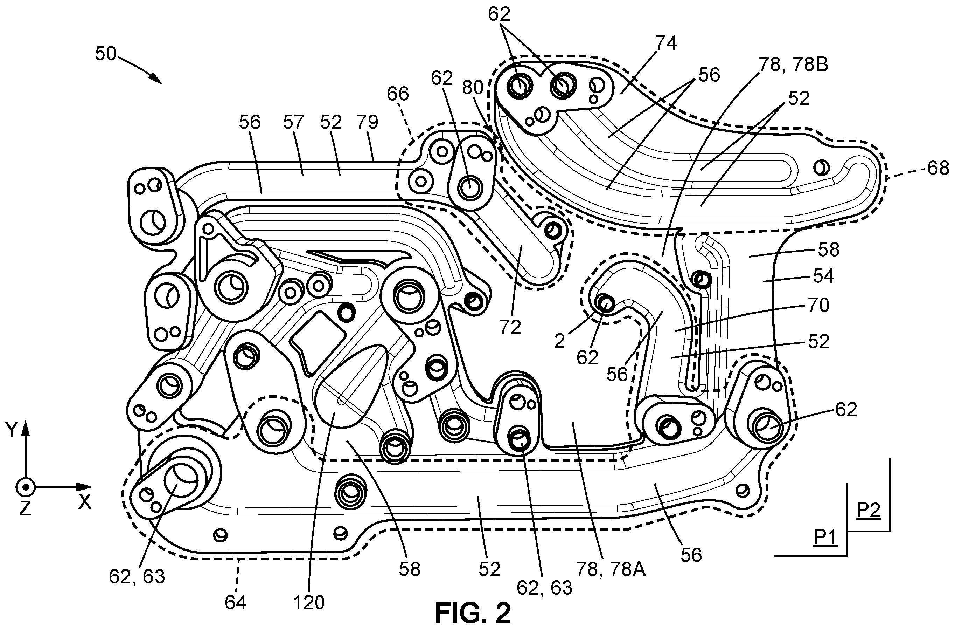

   [Fig. 2] is a schematical frontal view of a fluid distribution module for a thermal management system according to a first embodiment in which three zones receiving heat transfer fluids at different temperatures are circled in dotted lines.
**Fig. 3**

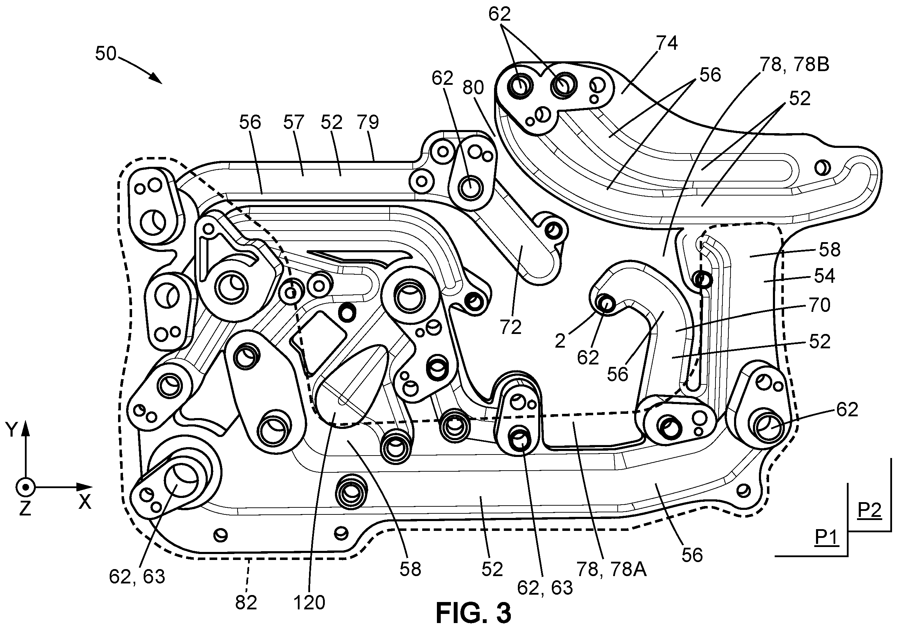

   [Fig. 3] is a schematical frontal view of the fluid distribution module of figure 2 in which a zone of high stiffness is circled in dotted lines.
**Fig. 4**

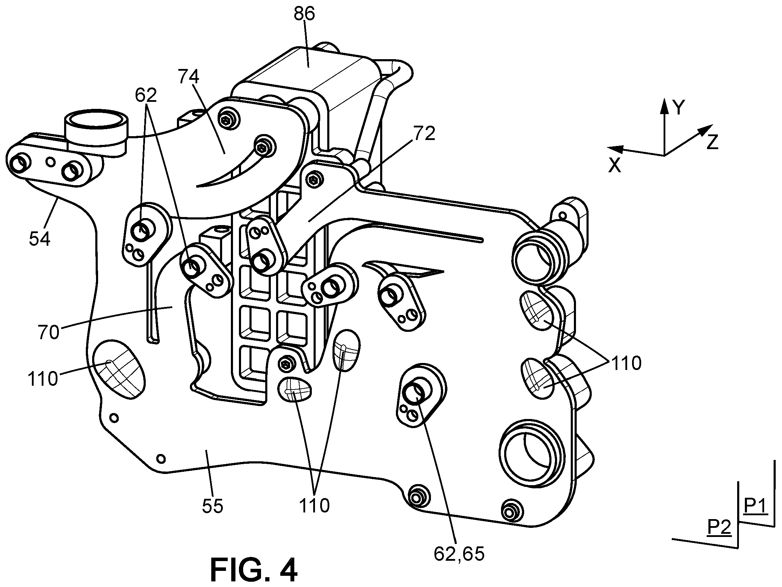

   [Fig. 4] is a schematical perspective view of the fluid distribution module of figure 2 with a component of the thermal management system attached to it.
**Fig. 5**

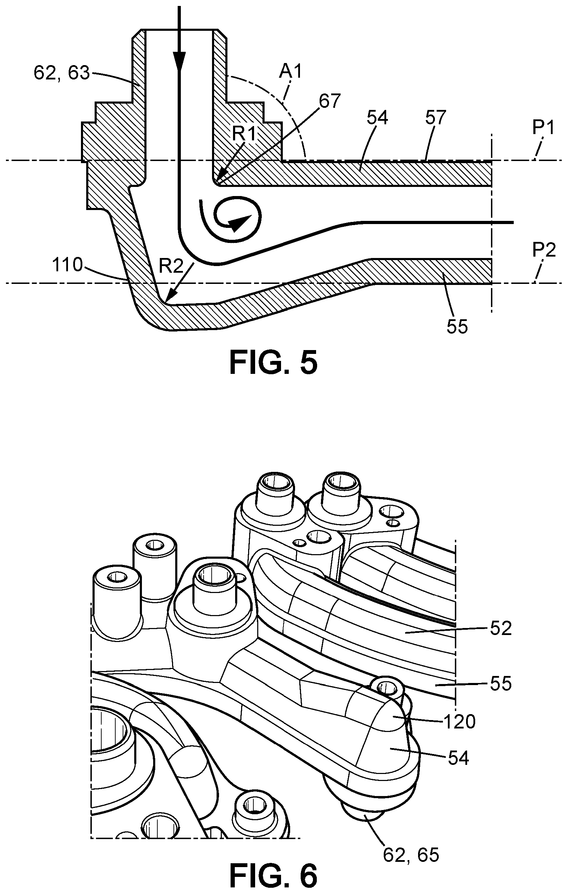

   [Fig. 5] is a schematical cross-sectional side view of a first pocket of the fluid distribution module of figure 2.
**Fig. 6**
   [Fig. 6] is a schematical perspective view of the first pocket of the second pocket of figure 4.
**Fig. 7**

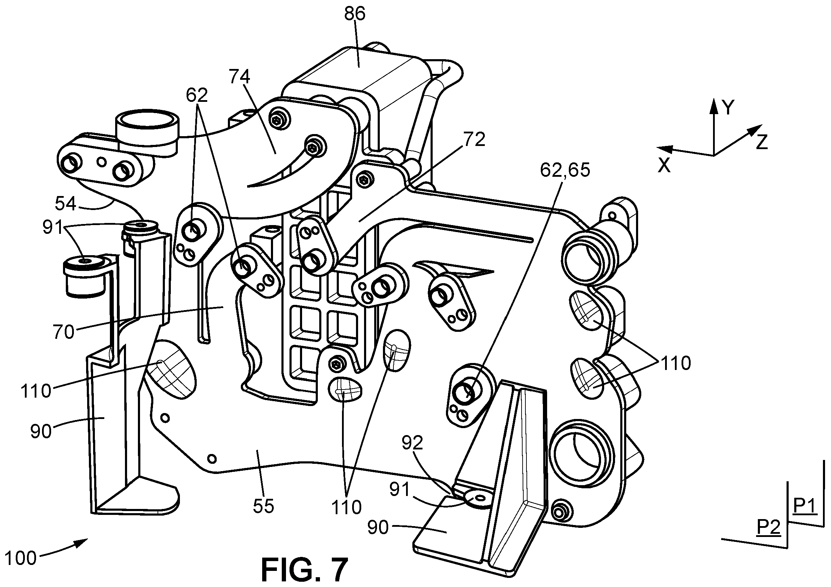

   [Fig. 7] is a schematical perspective view of a unit frame comprising the fluid distribution module of figure 2 with a component of the thermal management system attached to it.

### Description of embodiments

In this text, an orthonormal reference frame comprising an X-axis, a Y-axis, and a Z-axis perpendicular to each other is used to describe the different figures.

Figures 2 to 4 show a fluid distribution module 50 for a thermal management system. The thermal management system is in particular installed in a motor vehicle (not illustrated). The motor vehicle is preferably an electric vehicle or a hybrid vehicle, but it could also be an internal combustion engine vehicle.

The fluid distribution module 50 is configured to distribute in the thermal management system at least one heat transfer fluid. "Heat transfer fluid" is understood herein as a fluid capable of absorbing calories or frigories from at least one component of the thermal management system. As it will be detailed, several heat transfer fluids having or not the same composition but having different temperatures can travel in different zones of the module 50. The fluid distribution module 50 is for example a refrigerant distribution module. Alternatively, the fluid distribution module 50 could be a coolant distribution module.

The module 50 comprises a plurality of channels 52. The channels 52 are for example formed by fixing a first plate 54 to a second plate 55, shown in figure 4. The second plate 55 faces the first plate 54 in the Z-axis.

The first plate 54 comprises a plurality of tracks 56. A flat part 58 is arranged between the tracks 56. The flat part 58 is comprised in a first plane P1 substantially parallel to a X-Y plane (i.e., a plane comprising the X-axis and the Y-axis).

Each track 56 protrudes with respect to the flat part 58 along the Z-axis. In particular, each track 56 is delimited by a wall 57 that can protrude with respect to the flat part 58 along the Z-axis. For example, the wall 57 of each of the tracks 56 has a concave cross-section in a plane substantially perpendicular to the first plane P1.

The flat portion 58 is essentially flat. Nevertheless, it could also comprise one or more reinforcement rib(s) (not shown in the figures) protruding along the Z-axis with respect to the rest of the flat portion 58. In that case, each rib surrounds one or more tracks 56 and allows to increase the stiffness of the module 50.

The module 50 further comprises at least one connector 62 connected to the first plate 54. Advantageously, each connector 62 may be integrally formed with the first plate 54.

Each connector 62 is shaped to form a fixing point of a component of the thermal management system to the module 50 from which the heat transfer fluid comes or to which the heat transfer fluid is directed. The component of the thermal management system can be, for example, a compressor, refrigerant bottles, heat exchangers such as an evaporator and/or a chiller and/or a water chiller, and/or a condenser, valves, sensors, etc.

At least one of the connectors 62 is arranged on a track 56 and forms a hollow cavity that traverses in its entirety the wall 57 of the corresponding track 56. Such a connector 62 constitutes a first heat transfer fluid passage 63. The component of the thermal management system can therefore be fixed to said passage 63, so that the heat transfer fluid can travel between said component and the module 50.

Preferably, each heat transfer fluid passage 63 forms a first angle A1 comprised between 70° and 110° with the first plate 54. The first angle A1 is for example substantially equal to 90°.

Each first heat transfer fluid passage 63 is fluidically connected to at least one of the channels 52, so that the heat transfer fluids can travel between the heat transfer fluid passage 63 and the corresponding channel 52. In particular, the heat transfer fluid passage 63 can be a heat transfer fluid inlet and/or a heat transfer fluid outlet of the module 50.

Each passage 63 comprises a bend 67 connected to the first plate 54. As clearly shown in figure 5, the bend 67 has a substantially curved surface. Advantageously, a radius of curvature of said bend, called bend radius R1, is comprised between 1 mm and 15 mm. Such a bend radius R1 range makes it possible to reduce the turbulences created at the interface between the passage 63 and the channel 52 to which the passage 63 is fluidically connected.

In a non-limiting example, the bend radius R1 is comprised between 5 mm and 10 mm. Preferably, the bend radius R1 is bigger than 5 mm. The larger the bend radius R1, the more turbulences at the interface between the passage 63 and the corresponding channel 52 are reduced.

In the non-limiting embodiment of figure 4, the second plate 55 is essentially flat and is comprised in a second plane P2 substantially parallel to the first plane P1. The second plate 55 defines therefore a principal plane corresponding to the second plane P2.

In some cases, the second plate 55 has some tracks identical or similar to the tracks 56 of the first plate 54 but protruding in an opposite direction along the Z-axis.

As clearly shown in figure 4, some connectors 62 can also be connected to the second plate 55. For example, the connectors 62 can be formed integrally with the second plate 55. Some of the connectors 62 of the second plate 55 can form a second heat transfer fluid passage 65 identical or similar to the first heat transfer fluid passage 63 described above. As the first heat transfer fluid passage 63, each second heat transfer fluid passage 65 is fluidically connected to one of the channels 52 of the module 50. Each second heat transfer fluid passage 65 forms therefore a heat transfer fluid inlet and/or a heat transfer fluid outlet of the fluid distribution module 50.

In addition, as the first heat transfer fluid passage 63, each second heat transfer fluid passage 65 comprises a bend identical or similar to the bend 67 of each passage 63 described above but connected to the second plate 55.

As clearly shown in figure 4, the second plate 55 comprises at least a first pocket 110. Each first pocket 110 is advantageously placed opposite to one of the first heat transfer fluid passages 63. Analogously, the first plate 54 can comprise at least a second pocket, referenced 120 in figures 2 and 3. Each second pocket 120 is advantageously placed opposite to one of the second heat transfer fluid passages 65.

An example of first pocket 110 and second pocket 120 will be described later with reference to figures 5 and 6.

The first plate 54 and the second plate 55 are sealed together, for example by welding. The channels 52 are formed in the space comprised between the tracks 56 of either the first plate 54 and the second plate 55, and the other plate.

Advantageously, when the module 50 is a refrigerant distribution module, each of the first and the second plates 54, 55 are made of metal, for example of aluminum. When the module 50 is a coolant distribution module, each of the first and the second plates 54, 55 are made of polymer, for example of polypropylene.

As said, the module 50 distributes in the thermal management system at least one heat transfer fluid, for example a refrigerant or a coolant.

Several refrigerants or coolants having or not the same composition but having different temperatures can travel in different zones of the module 50. In this case, the module 50 may comprise a first zone 64, a second zone 66 and a third zone 68.

Each zone 64, 66, 68 comprise at least one channel 52 in which the corresponding heat transfer fluid flows. In the non-limiting embodiment of figure 2, the first zone 64 and the second zone 66 comprise a single channel 52, while the third zone 68 comprise two channels 52.

In each channel 52 of the first zone 64, the heat transfer fluid may flow at a first temperature. The first temperature ranges from -15°C to 15°C, preferably from -10°C to 10°C. The first zone 64 is therefore for example a low temperature zone.

In the first zone 64, the heat transfer fluid may flow at a low pressure. "Low pressure" is understood here as a pressure comprised between 0.1 bar and 8 bar, preferably between 0.5 bar and 6.5 bar. This low pressure is generally accompanied of a low speed of the heat transfer fluid.

In the first zone 64, the heat transfer fluid may be advantageously a gaseous fluid.

In each channel 52 of the second zone 66, the heat transfer fluid may flow at a second temperature that is higher than the first temperature in the first zone 64. The second temperature ranges from 70°C to 130°C. The second zone 66 is therefore for example a high temperature zone.

In the second zone 66, the heat transfer fluid may flow at a high pressure. "High pressure" is understood here as a pressure comprised between 9 bar and 30 bar, preferably between 10 bar and 26 bar. This low pressure is generally accompanied of a high speed of the heat transfer fluid.

In the second zone 66, the heat transfer fluid may be advantageously a gaseous fluid.

In each channel 52 of the third zone 68, the heat transfer fluid may flow at a third temperature that is different than the first temperature in the first zone 64 and the second temperature in the second zone 66. The third temperature ranges from 25°C to 50°C, preferably from 25°C to 45°C. The third zone 68 is therefore for example a medium temperature zone.

In the third zone 68, the heat transfer fluid may flow at high pressure (as defined above). In the third zone 68, the heat transfer fluid can be a gaseous fluid and/or a liquid fluid. For example, in the embodiment of figure 2, since the third zone 68 comprises two channels 52, in one channel 52 the heat transfer fluid can be in the liquid state while in the other channel 52 the heat transfer fluid can be in the gaseous state.

As said, the heat transfer fluids flowing in the first zone 64, the second zone 66 and the third zone 68 can have the same composition or a different composition. When a same zone comprises several channels 52, the heat transfer fluids flowing in each channel 52 of the same zone can have the same composition or a different one.

In an example not shown, the three zones 64, 66, 68 are directly connected to each other. In the non-limiting illustrated embodiment, the first zone 64 and the second zone 66 are separated by a first gap 78A, while the third zone 68 is separated from the first zone 64 and the second zone 66 by a second gap 78B. As shown in the figures, the first gap 78A and the second gap 78B can be integrally formed, so that they form a single gap 78. The gaps 78, 78A and 78B are zones directly between the first zone 64 and at least one of the second zone 66 and the third zone 68 in which there is no material part of the module 50. In other words, in the gaps 78, 78A and 78B there is no physical connection (or bridge) between the first zone 64 and the second zone 66. This limits the heat transfer between the first zone 64, the second zone 66 and the third zone 68 due to the temperature difference between the first temperature, the second temperature and the third temperature of the heat transfer fluids. Thermal stresses in the module 50 are thus limited.

In the planes P1 and P2, the gaps 78, 78A and 78B may be delimited by part of an edge 79 of the fluid distribution module 50 that forms an open loop. In other words, in the planes P1 and P2, the gaps 78, 78A, 78B may comprise an opening 80. This allows the module 50 to have a certain flexibility that allows the module 50 to move locally if for example a chiller or a heat exchanger to which it is connected thermally expands. Mechanical stresses in the module 50 are therefore limited. Thermal dilatation or contraction of the module 50 is thus possible while limiting the mechanical stresses.

As clearly shown in the figures, at least a portion of the first zone 64 can form a first tongue 70, at least a portion of the second zone 66 can form a second tongue 72, and at least a portion of the third zone 68 can form a third tongue 74. Generally speaking, a "tongue" is defined herein as a portion of each zone 64, 66, 68 that is directly connected to the rest of the module 50 but mostly not surrounded by the material of the module 50. For example, a tongue may be a portion of each zone that includes only a joining line with the rest of the module 50, such joining line being, for example, substantially parallel to a single straight direction. In particular, the tongues 70, 72 and 74 of figure 2 are surrounded by the first gap 78A, the second gap 78B and/or the outside of the fluid distribution module 50.

Each zone 64, 66, 68 can comprise at least one connector 62 forming a first heat transfer fluid passage 63 or a second heat transfer fluid passage 65 as described above.

Advantageously, at least one connector 62 can be arranged on the first tongue 70, the second tongue 72 and the third tongue 74. The at least one connector 62 arranged on the first tongue 70, the second tongue 72 and the third tongue 74 may form a first heat transfer fluid passage 63 or a second heat transfer fluid passage 65.

Each tongue 70, 72, 74 form an elastic area of the module 50. By "elastic area" it is understood an area that has a certain level of flexibility and movement with respect to the rest of the module. The level of flexibility and movement depends on the design of tongues and the elastic module of the material. In the parts of the module 50 that tongues 70, 72, 74 are not included, stiff areas 82 are formed, as shown in figure 3.

Thanks to the elastic areas, it is possible to connect to the module 50 a component, referenced 86 in figure 4, of the thermal management system as those presented previously, the module 50 being able to follow the eventual movement of this component when it changes its volume due to thermal expansion or contraction. This limits the occurrence of mechanical stresses in the distribution module 50.

The stiff areas 82 allow that the module 50 forms a unit frame 100 with at least one bracket 90. In particular, the at least one bracket 90 is fixed to the stiff areas 82 of the module 50. In the non-limiting embodiment of figure 7, two brackets 90 are provided.

The module 50 and each bracket 90 can be fixed either by a fixed connection or by a permanent joint.

As shown in figure 7, the at least one bracket 90 is provided with at least one decoupling element 91 received in a groove 92 formed in the respective bracket 90. The decoupling elements can be of any suitable kind (foam, rubber, ...). The decoupling element 91 ensures a vibrational decoupling of the thermal management system from the vehicle body. Hence, the propagation of acoustic waves and vibrations from the thermal management system to the cabin of the vehicle is reduced, which improves the comfort of the passengers.

Forming a unit frame UF allow that the thermal management system can be handled as one piece, which is convenient for installing or uninstalling the thermal management system in the vehicle.

The number of brackets, their position and shape depend on the number of components of the thermal management system.

Advantageously, the stiff areas 82 of the module 50 to which the brackets 90 are fixed correspond to low temperature zones. This avoids the occurrence of mechanical stresses in the brackets due to thermal expansion of the module 50.

One of the first pockets 110 is now described with reference to figure 5.

As said, the first pocket 110 is comprised in the second plate 55 and placed opposite to one of the first heat transfer fluid passages 63. As shown in figure 5, the first pocket 110 joins the passage 63 with the second plate 55.

The first pocket 110 is substantially concave. As shown in figure 5, the first pocket 110 protrudes with respect to the second plane P2.

In the non-limiting example of figure 5, the pocket 110 has an oval shape, but any other shape is possible. In particular, the shape and size of the pocket 110 can be adapted to the pressure and phase (liquid/gas) of the heat transfer fluid circulating inside the channel 52 to which the passage 63 is fluidically connected. For example, when the heat transfer fluid is in the liquid phase, the first pocket 110 may be smaller than when the heat transfer fluid is in the gas phase. In the case of a heat transfer fluid in a bi-phase liquid-gas, the size of the pocket 110 may be intermediate between the size of the first pocket 110 when the heat transfer fluid is in the liquid phase and in the gas phase. In addition, the shape and size of the pocket 110 can be adapted to the shape of channel 52 to which the passage 63 is fluidically connected.

Advantageously, a radius of curvature of the first pocket 110, called pocket radius R2, is comprised between 20 mm and 50 mm, preferably between 30 mm and 40 mm.

In some cases, the first pocket 110 is formed integrally with the second plate 55, for example by stamping. In other cases, the first pocket 110 is formed by a separate piece, having a concave shape, that is attached to a through hole formed in the second plate 55.

Figure 6 shows an example of second pocket 120. The description of the first pocket 110 above is applicable to any the second pocket 120. Therefore, for the sake of conciseness, the second pocket 120 is not described in detail hereinafter, but only the differences from the first pocket 110 are detailed.

The second pocket 120 differs from the first pocket 110 in that the second pocket 120 is comprised in the first plate 54 and placed opposite to one of the second heat transfer fluid passages 65. The second pocket 120 therefore joins the passage 65 with the first plate 54 and protrudes with respect to the first plate P1.

The rest of the features of the first pocket 110 are applicable to the second pocket 120.

Thanks to the first pocket 110 and/or the second pocket 120, the heat transfer fluid entering or leaving the module 50 through the passage 63 or the passage 65 has more space to turn, so that rotations of the heat transfer fluid of about 90° are avoided. The heat transfer fluid therefore flows more smoothly, and the occurrence of turbulences at the interface between the passage 63 or the passage 65 and the channel 52 to which the respective passage 63, 65 is fluidically connected is limited. Consequently, the pressure of the heat transfer fluid in the module 50 is reduced, each passage 63, 65 forming a pressure drop zone of the module 50.

Also, thanks to the reduction of turbulences at the interface between each passage 63, 65 and the corresponding channel 52, the risk of erosion of the module 50, and subsequent generation of contamination, at the interface between the corresponding passage 63, 65 and the channel 52 is limited. This risk of erosion is particularly reduced in the bend radius R1 zone.

In addition, due to the reduction of turbulences, the noise generated by the circulation of the heat transfer fluid in the fluid distribution module 50 is reduced. This reduction of noise is particularly important when the module 50 is attached to the vehicle chassis.

Finally, as the flow of the heat transfer fluid is smoother, the heat transfer fluid move in the module 50 with less energy and speed, so that energy consumption in the module 50 is minimized.

A method of manufacturing the module 50 is now detailed.

Firstly, the first plate 54 and the second plate 55 comprising the tracks 56 and the connectors 62, but without first pockets 110 and second pockets 120 are obtained.

Secondly, each first pocket 110 and, eventually, each second pocket 120 are formed respectively in the second plate 55 and in the first plate 54 by stamping the corresponding plate 54, 55. By "stamping" is meant a process comprising applying a pressure on the corresponding plate 54, 55 to create thereon a concavity suitable to form a pocket 110, 120 as described below.

Finally, the first plate 54 and the second plate 55 are sealed together. In particular, the first plate 54 is arranged opposite to the second plate 55 to form the plurality of channels 52, each passage 63 being placed opposite to one first pocket 110. If the second plate 55 comprises a passage 65, and the first plate comprises a second pocket 120, the first plate 54 and the second plate 55 are sealed together so that each passage 65 is opposite to one of the second pockets 120.

In an alternative method, when the first pocket 110 and/or the second pocket 120 are formed by a separate concave piece, the method first comprises making at least one through hole in, respectively, the second plate 55 and/or in the first plate 54. Then, the separated concave piece is attached to each through hole of second plate 55 and/or of the first plate 54 to form the first pocket 110 and/or the second pocket 120. Finally, the first plate 54 and the second plate 55 are sealed together as explained above.

## Claims

1. Fluid distribution module (50) for a thermal management system, the fluid distribution module (50) comprising a first plate (54) and a second plate (55), the first plate (54) being arranged opposite to the second plate (55) to form a plurality of channels (56) for distributing heat transfer fluids, wherein the first plate (54) is connected to at least one first heat transfer fluid passage (63) forming a heat transfer fluid inlet or a heat transfer fluid outlet of the fluid distribution module, the second plate (55) comprising at least a first pocket (110) substantially concave placed opposite to the at least one first heat transfer fluid passage (63), **characterized in that** the second plate (55) defines a principal plane (P2), the first pocket protruding from said principal plane (P2).

2. Fluid distribution module (50) according to claim 1, wherein the at least one first heat transfer fluid passage (63) forms a first angle (A1) comprised between 70° and 110° with the first plate.

3. Fluid distribution module (50) according to the preceding claim, wherein said first angle (A1) is substantially equal to 90°.

4. Fluid distribution module (50) according to any one of the preceding claims, wherein a radius of curvature (R2) of the first pocket (110), called pocket radius (R2), is comprised between 20 mm and 50 mm, preferably between 30 mm and 40 mm.

5. Fluid distribution module (50) according to any one of the preceding claims, wherein the at least one first heat transfer fluid passage (63) comprises a bend (67) connected to the first plate (54), the bend (67) having a substantially curved surface.

6. Fluid distribution module (50) according to any one of the preceding claims, wherein the second plate (55) is connected to at least one second heat transfer fluid passage (65) forming a heat transfer fluid inlet or a heat transfer fluid outlet of the fluid distribution module (50), the first plate (54) comprising at least a second pocket (120) substantially concave placed opposite to the at least one second heat transfer fluid passage (65).

7. A method for manufacturing a fluid distribution module (50) according to any one of the preceding claims, the method comprising:
a) Providing a first plate (54) with at least one first heat transfer fluid passage (63) forming a heat transfer fluid inlet or a heat transfer fluid outlet of the fluid distribution module (50);
b) Providing a second plate (55) with at least one first pocket (110) substantially concave;
c) Arranging the first plate (54) opposite to the second plate (55) to form a plurality of channels (52) for distributing heat transfer fluids, the at least one first heat transfer fluid passage (63) being placed opposite to the at least first pocket (110).

8. Method according to claim 9, wherein step b) comprises stamping the second plate (55) to form the at least one first pocket (110).

9. Method according to claim 9, wherein step b) comprises:
- Making at least one through hole in the second plate (55);
- Attaching a concave piece to said through hole to form the at least one first pocket (110).

## Patentansprüche

1. Fluidverteilungsmodul (50) für ein Wärmemanagementsystem, wobei das Fluidverteilungsmodul (50) eine erste Platte (54) und eine zweite Platte (55) umfasst, wobei die erste Platte (54) gegenüber der zweiten Platte (55) angeordnet ist, um eine Vielzahl von Kanälen (56) zur Verteilung von Wärmeübertragungsfluiden zu bilden, wobei die erste Platte (54) mit mindestens einem ersten Wärmeübertragungsfluid-Durchgang (63) verbunden ist, der einen Wärmeübertragungsfluid-Einlass oder einen Wärmeübertragungsfluid-Auslass des Fluidverteilungsmoduls bildet, wobei die zweite Platte (55) mindestens eine erste Tasche (110) aufweist, die im Wesentlichen konkav und gegenüber dem mindestens einen ersten Wärmeübertragungsfluid-Durchgang (63) angeordnet ist, **dadurch gekennzeichnet, dass** die zweite Platte (55) eine Hauptebene (P2) definiert, wobei die erste Tasche aus der genannten Hauptebene (P2) herausragt.

2. Fluidverteilungsmodul (50) nach Anspruch 1, wobei der mindestens eine erste Wärmeübertragungsfluid-Durchgang (63) einen ersten Winkel (A1) zwischen 70° und 110° mit der ersten Platte bildet.

3. Fluidverteilungsmodul (50) nach dem vorhergehenden Anspruch, wobei der genannte erste Winkel (A1) im Wesentlichen gleich 90° ist.

4. Fluidverteilungsmodul (50) nach einem der vorhergehenden Ansprüche, wobei ein Krümmungsradius (R2) der ersten Tasche (110), als Taschenradius (R2) bezeichnet, zwischen 20 mm und 50 mm, vorzugsweise zwischen 30 mm und 40 mm liegt.

5. Fluidverteilungsmodul (50) nach einem der vorhergehenden Ansprüche, wobei der mindestens eine erste Wärmeübertragungsfluid-Durchgang (63) eine Biegung (67) umfasst, die mit der ersten Platte (54) verbunden ist, wobei die Biegung (67) eine im Wesentlichen gekrümmte Oberfläche aufweist.

6. Fluidverteilungsmodul (50) nach einem der vorhergehenden Ansprüche, wobei die zweite Platte (55) mit mindestens einem zweiten Wärmeübertragungsfluid-Durchgang (65) verbunden ist, der einen Wärmeübertragungsfluid-Einlass oder einen Wärmeübertragungsfluid-Auslass des Fluidverteilungsmoduls (50) bildet, wobei die erste Platte (54) mindestens eine zweite Tasche (120) aufweist, die im Wesentlichen konkav und gegenüber dem mindestens einen zweiten Wärmeübertragungsfluid-Durchgang (65) angeordnet ist.

7. Verfahren zur Herstellung eines Fluidverteilungsmoduls (50) nach einem der vorhergehenden Ansprüche, wobei das Verfahren umfasst:
a) Bereitstellen einer ersten Platte (54) mit mindestens einem ersten Wärmeübertragungsfluid-Durchgang (63), der einen Wärmeübertragungsfluid-Einlass oder einen Wärmeübertragungsfluid-Auslass des Fluidverteilungsmoduls (50) bildet;
b) Bereitstellen einer zweiten Platte (55) mit mindestens einer ersten im Wesentlichen konkaven Tasche (110);
c) Anordnen der ersten Platte (54) gegenüber der zweiten Platte (55), um eine Vielzahl von Kanälen (52) zur Verteilung von Wärmeübertragungsfluiden zu bilden, wobei der mindestens eine erste Wärmeübertragungsfluid-Durchgang (63) gegenüber der mindestens ersten Tasche (110) angeordnet wird.

8. Verfahren nach Anspruch 9, wobei Schritt b) das Stanzen der zweiten Platte (55) zur Bildung der mindestens einen ersten Tasche (110) umfasst.

9. Verfahren nach Anspruch 9, wobei Schritt b) umfasst:
- Herstellen mindestens einer Durchgangsbohrung in der zweiten Platte (55);
- Befestigen eines konkaven Teils an der genannten Durchgangsbohrung zur Bildung der mindestens einen ersten Tasche (110).

## Revendications

1. Module de distribution de fluide (50) pour un système de gestion thermique, le module de distribution de fluide (50) comprenant une première plaque (54) et une deuxième plaque (55), la première plaque (54) étant disposée en regard de la deuxième plaque (55) pour former une pluralité de canaux (56) pour distribuer des fluides caloporteurs, dans lequel la première plaque (54) est connectée à au moins un premier passage de fluide caloporteur (63) formant une entrée de fluide caloporteur ou une sortie de fluide caloporteur du module de distribution de fluide, la deuxième plaque (55) comprenant au moins une première poche (110) sensiblement concave placée en regard dudit au moins un premier passage de fluide caloporteur (63), **caractérisé en ce que** la deuxième plaque (55) définit un plan principal (P2), la première poche faisant saillie dudit plan principal (P2).

2. Module de distribution de fluide (50) selon la revendication 1, dans lequel ledit au moins un premier passage de fluide caloporteur (63) forme un premier angle (A1) compris entre 70° et 110° avec la première plaque.

3. Module de distribution de fluide (50) selon la revendication précédente, dans lequel ledit premier angle (A1) est sensiblement égal à 90°.

4. Module de distribution de fluide (50) selon l'une quelconque des revendications précédentes, dans lequel un rayon de courbure (R2) de la première poche (110), appelé rayon de poche (R2), est compris entre 20 mm et 50 mm, de préférence entre 30 mm et 40 mm.

5. Module de distribution de fluide (50) selon l'une quelconque des revendications précédentes, dans lequel ledit au moins un premier passage de fluide caloporteur (63) comprend un coude (67) connecté à la première plaque (54), le coude (67) ayant une surface sensiblement courbée.

6. Module de distribution de fluide (50) selon l'une quelconque des revendications précédentes, dans lequel la deuxième plaque (55) est connectée à au moins un deuxième passage de fluide caloporteur (65) formant une entrée de fluide caloporteur ou une sortie de fluide caloporteur du module de distribution de fluide (50), la première plaque (54) comprenant au moins une deuxième poche (120) sensiblement concave placée en regard dudit au moins un deuxième passage de fluide caloporteur (65).

7. Procédé de fabrication d'un module de distribution de fluide (50) selon l'une quelconque des revendications précédentes, le procédé comprenant :
a) Fournir une première plaque (54) avec au moins un premier passage de fluide caloporteur (63) formant une entrée de fluide caloporteur ou une sortie de fluide caloporteur du module de distribution de fluide (50) ;
b) Fournir une deuxième plaque (55) avec au moins une première poche (110) sensiblement concave ;
c) Disposer la première plaque (54) en regard de la deuxième plaque (55) pour former une pluralité de canaux (52) pour distribuer des fluides caloporteurs, ledit au moins un premier passage de fluide caloporteur (63) étant placé en regard de ladite au moins première poche (110).

8. Procédé selon la revendication 9, dans lequel l'étape b) comprend l'emboutissage de la deuxième plaque (55) pour former ladite au moins une première poche (110).

9. Procédé selon la revendication 9, dans lequel l'étape b) comprend :
- Réaliser au moins un trou traversant dans la deuxième plaque (55) ;
- Fixer une pièce concave audit trou traversant pour former ladite au moins une première poche (110).
